# EUROPÄISCHE PATENTSCHRIFT

(11) **EP 1 922 281 B1**
(45) Veröffentlichungstag und Bekanntmachung des Hinweises auf die Patenterteilung: **14.09.2011**
(21) Anmeldenummer: 06753694.6
(22) Anmeldetag: 17.05.2006
(51) Int. Cl.: B66D 5/14, B66B 5/04, F16D 59/02, F16D 1/033, F16D 3/70

(54) **ANBAUBREMSE FÜR TREIBSCHEIBE**
EXTERNAL-MOUNTED BRAKE FOR A DRIVING DISK
FREIN ANNEXE POUR POULIE MOTRICE

(30) Priorität: 18.05.2005 DE 102005022897
(43) Veröffentlichungstag der Anmeldung: 21.05.2008
(73) Patentinhaber: Chr. Mayr GmbH & Co. KG, 87665 Mauerstetten (DE)
(72) Erfinder: WEISS, Harald, 87677 Stöttwang (DE); VOGT, Herbert, 87665 Mauerstetten (DE); DROPMANN, Christoph, 87600 Kaufbeuren (DE); EISENBURGER, Josef, 86842 Türkheim (DE)
(74) Vertreter: Ruschke, Hans Edvard
(86) Internationale Anmeldenummer: PCT/EP2006/004695
(87) Internationale Veröffentlichungsnummer: WO 2006/122796

(56) Entgegenhaltungen:
- EP-A- 0 545 369
- DE-U1- 29 604 779
- US-A- 5 921 866

## Beschreibung

Bei Aufzügen mit Kabinen, welche mit Seilen über eine Treibscheibe und Gegengewichten betrieben werden, kam es zu Problemen kommen, nämlich dass bei Versagen von Bauteilen der Aufzug nach oben nicht genügend abgesichert ist.
Bei entsprechender Geschwindigkeit des Aufzugs nach unten fällt eine Fangvorrichtung ein. Eine Fangvorrichtung nach oben wurde in der Vergangenheit bei den Aufzügen nicht berücksichtigt.

Deshalb wurde es notwendig, eine Nachrüstung von Aufzügen mit einer zusätzlichen Bremse vorzunehmen, welche den Fang nach oben berücksichtigt und noch mehr Sicherheit gegen Unfälle bietet. Mögliche Fehlerquellen sind z.B. ein Bruch der Abtriebswelle vom Getriebe, bzw. Zahnradbrüche innerhalb des Getriebes, sowie z.B. ein Versagen der Betriebsbremse, obwohl diese als Zweikreisbremssystem ausgebildet ist.

Mit einer zusätzlichen Bremse nach der nächstliegenden EP 0 545 369 A2 wird versacht eine Erhöhung der Sicherheit des Aufzugs in der Fahrt sowohl nach oben wie nach unten zu gewährleisten.

Beim Gegenstand der EP 0 545 369 A2 wird die komplette Bremse mit ihrem gesamten Gewicht auf dem zylindrischen Fortsatz gelagert, welcher entweder an der Ausgangswelle oder der Seilscheibe befestigt ist. Somit kommen mit einem verlängerten Hebelarm auf die Ausgangswelle zusätzliche Belastungen, welche bei einem zusätzlichen Anbau der Bremse berücksichtigt werden müssen. Bei der Auslegung der Aufzugsanlage sind solche zusätzlichen Belastungen nicht berücksichtigt worden.

Dieses Problem wird durch die Gesamtheit der Merkmale des Anspruches 1 gelöst.

Dadurch wird erreicht, dass eine zusätzliche separat abgestützte, Bremse direkt an der Treibscheibe, über welche die Seile der Kabine und des Gegengewichtes laufen, vorgesehen wird und somit die Treibscheibe direkt abstützt.

Eine solche Bremse muss an bestehende Aufzugsanlagen anbaubar sein. Somit musste eine konstruktive Lösung gesucht werden, welche den Anbau einer Sicherheitsbremse an verschiedene bauliche und konstruktive Gegebenheiten einer solchen Treibscheibe ermöglicht. Es gibt Getriebeabtriebswellen mit Treibscheiben, welche zusätzlich einen Lagerzapfen mit einer separaten Lagerung auf der Gegenseite haben, d. h. also auf der von der Antriebsseite (siehe Welle 16 in Fig. 4) abgewandten Seite der Treibscheibe. Des weiteren sind konische Abtriebswellen mit Pressdeckel (Fig.5, Welle 16) vorhanden. Ebenso sind Treibscheiben mit Material auf der Nabenseite (Fig. 6, Nabe 27) vorhanden, an welche ein zusätzliches Gewinde (28 in Fig. 6) für die Drehmomentübertragung anbringbar ist. Bei Treibscheiben mit wenig Material auf der Nabenseite muss die Treibscheibe am Außenumfang (15 in Fig. 7) mit Gewinde(n) ausgeführt werden. Eine weitere Möglichkeit besteht darin, die Speichen der Treibscheibe zur Drehmomentübertragung zu nutzen (Fig.8).

Die erfindungsgemässe Lösung wird dadurch erreicht, dass eine neben einer vorhandenen Treibscheibe anzubringende Anbaubremse entwickelt wurde, welche die Möglichkeit einer zusätzlichen Lagerung in der Bremse für die Treibscheibe beinhaltet oder über einen Zusatzflansch mit Aufnahme von elastischen Elementen die Drehmomentübertragung von der Bremse auf die Treibscheibe übernimmt.

Mit diesen einzelnen Varianten kann sichergestellt werden, dass vorhandene Aufzüge ohne großen Aufwand mit einer zusätzlichen Bremse nachgerüstet werden können, die neben die vorhandene Treibscheibe gesetzt wird. Bei der Nachrüstung muss lediglich zwischen dem bauwerkseitigen Sockel und dem Anbaubügel der Bremse ein Zwischenstück zum Höhenausgleich vorgesehen werden.

Mit dieser Lösung greift die Bremse direkt an der Treibscheibe an, mit der sie drehmomentfest verbunden ist. Irgendwelche Zwischenelemente zwischen Antrieb und Treibscheibe, welche Fehlfunktionen hervorrufen können, werden ausgeschaltet bzw. sind nicht vorhanden.

Mehrere Ausführungsformen der vorliegenden Erfindung werden anhand der beigefügten Zeichnungen beschrieben. Darin zeigt:

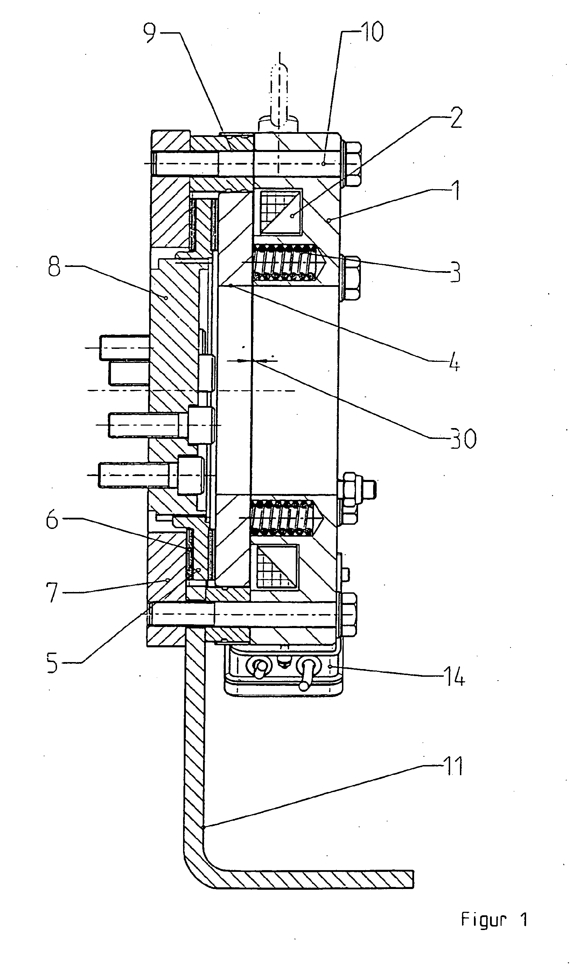

- Figur 1: das Schnittbild der anzubauenden Bremse;

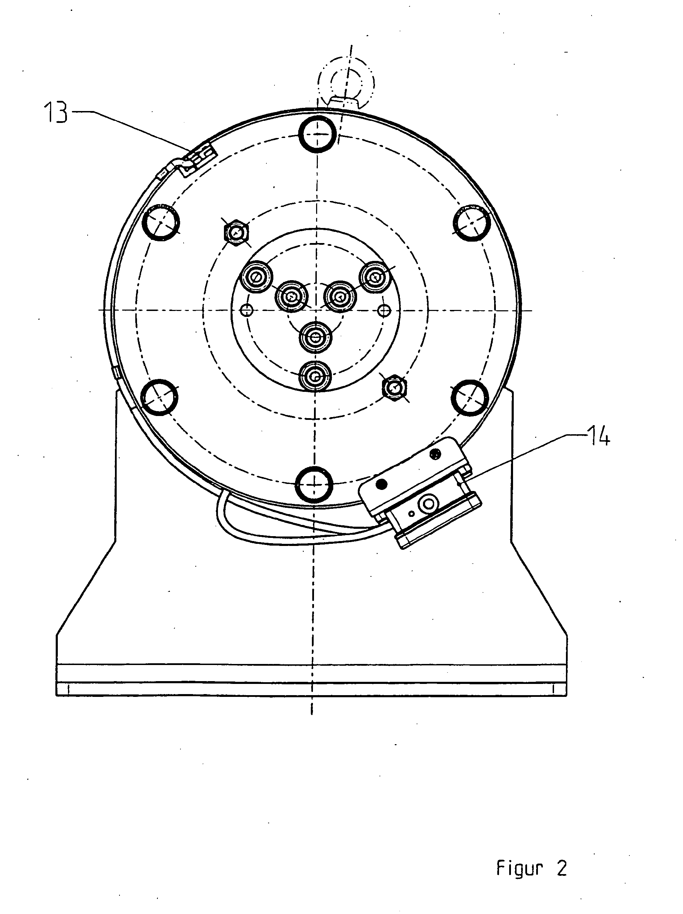

- Figur 2: die Seitenansicht rechts der anzubauenden Bremse;

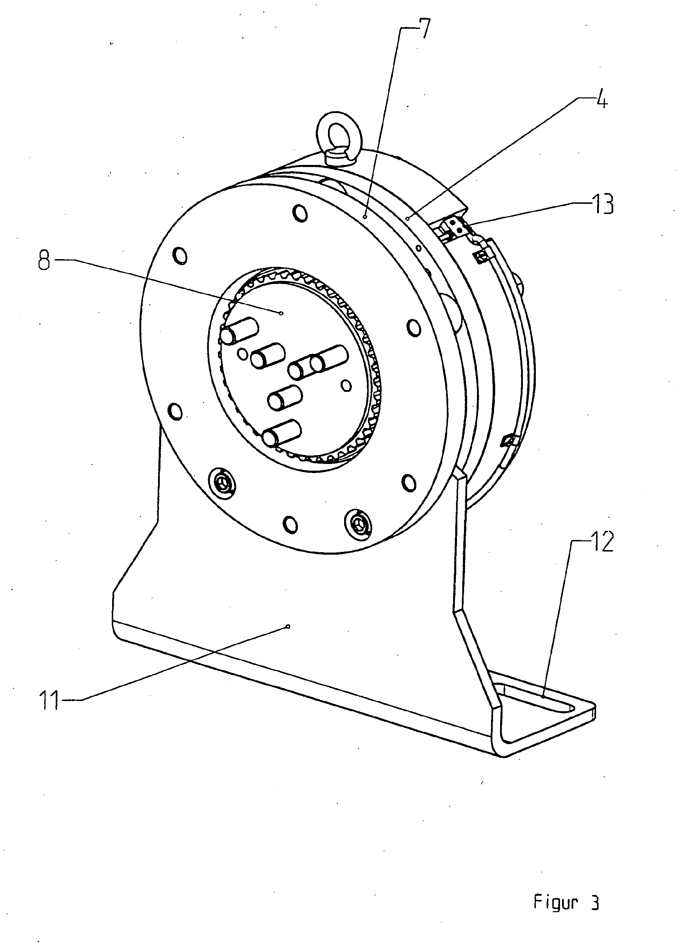

- Figur 3: ein Schrägbild der anzubauenden Bremse;

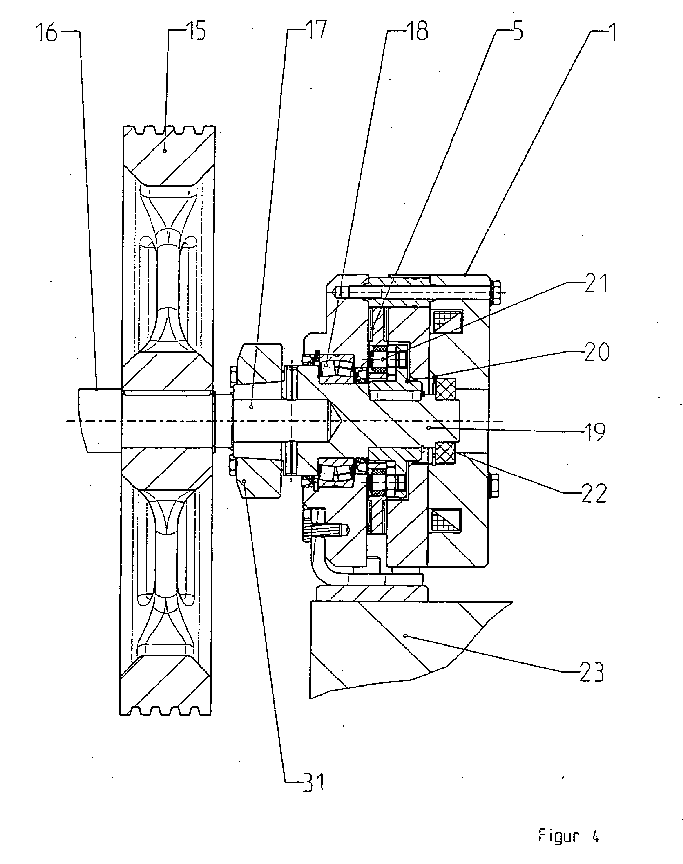

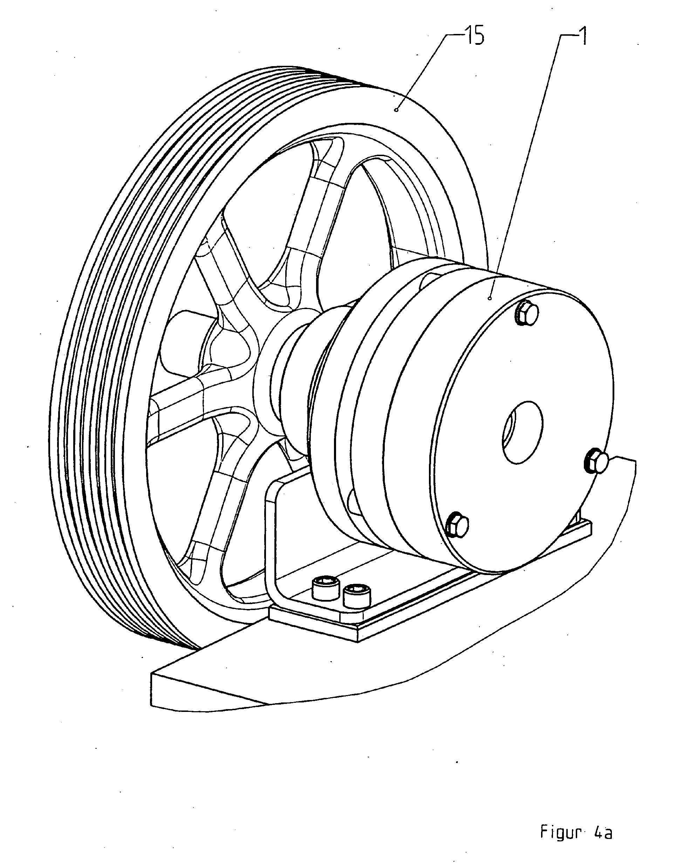

- Figur 4: ein Schnittbild der anzubauenden Bremse und der anzutreibenden Welle (Wellenzapfen 17) mit der zusätzlichen Lagerung in der Bremse;
- Figur 4 a: ein Schrägbild von Figur 4;

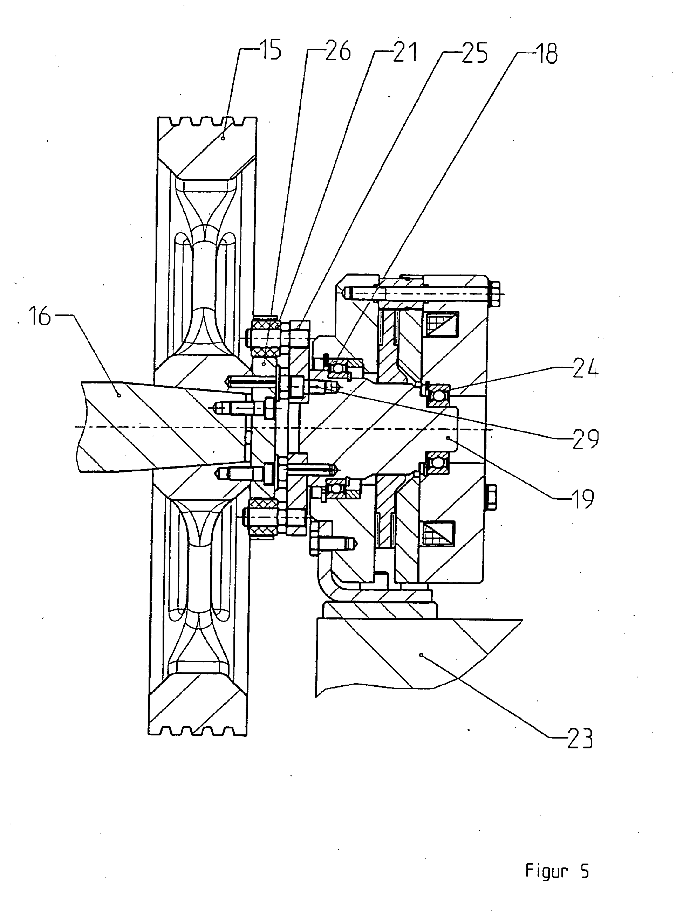

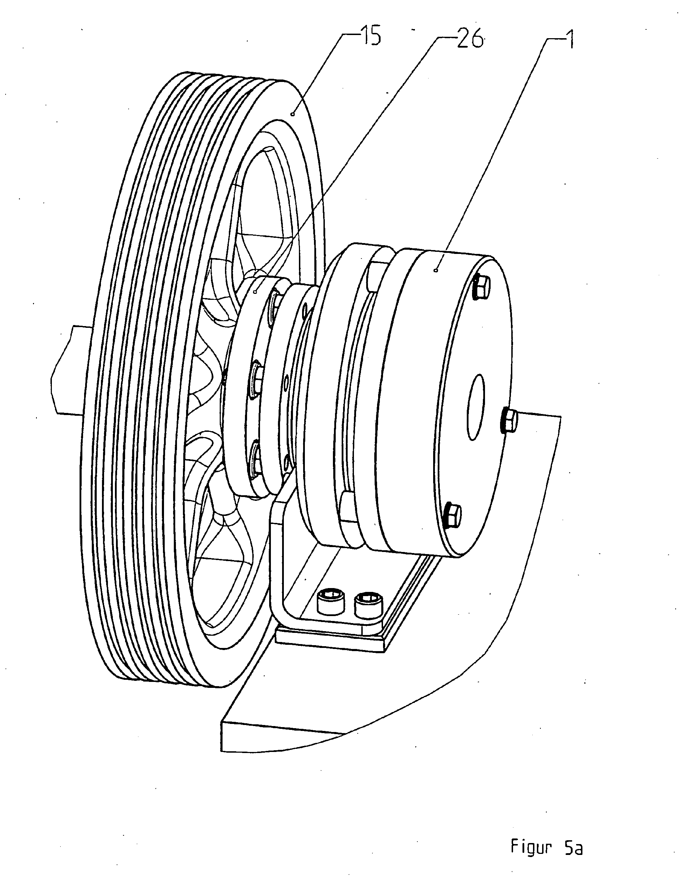

- Figur 5: ein Schnittbild der anzubauenden Bremse mit Verbindungsflansch 26 als Ersatz für einen Pressdeckel zur axialen Fixierung der Treibscheibe;
- Figur 5 a: ein Schrägbild von Figur 5;

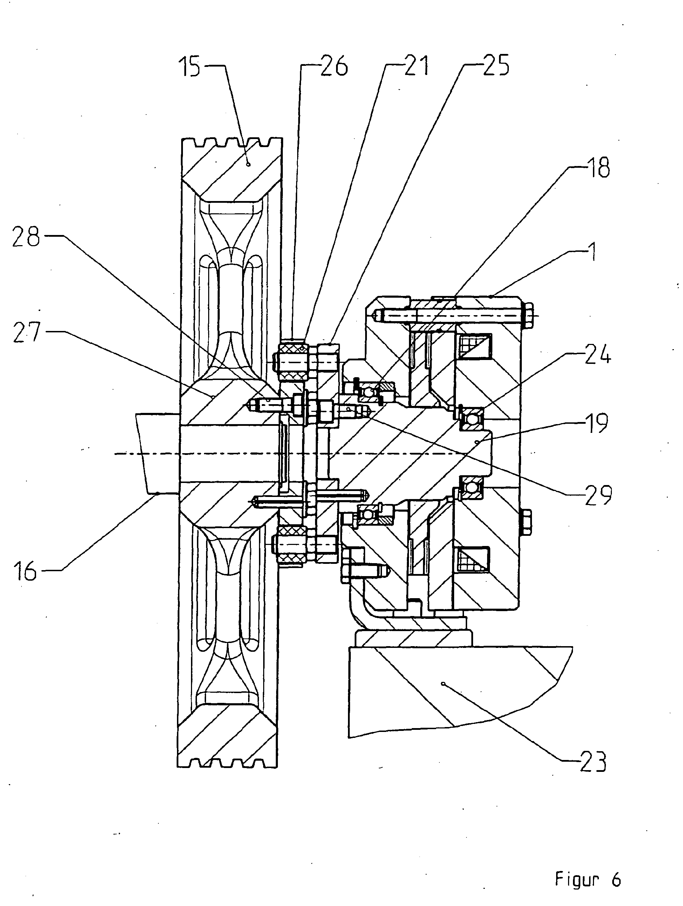

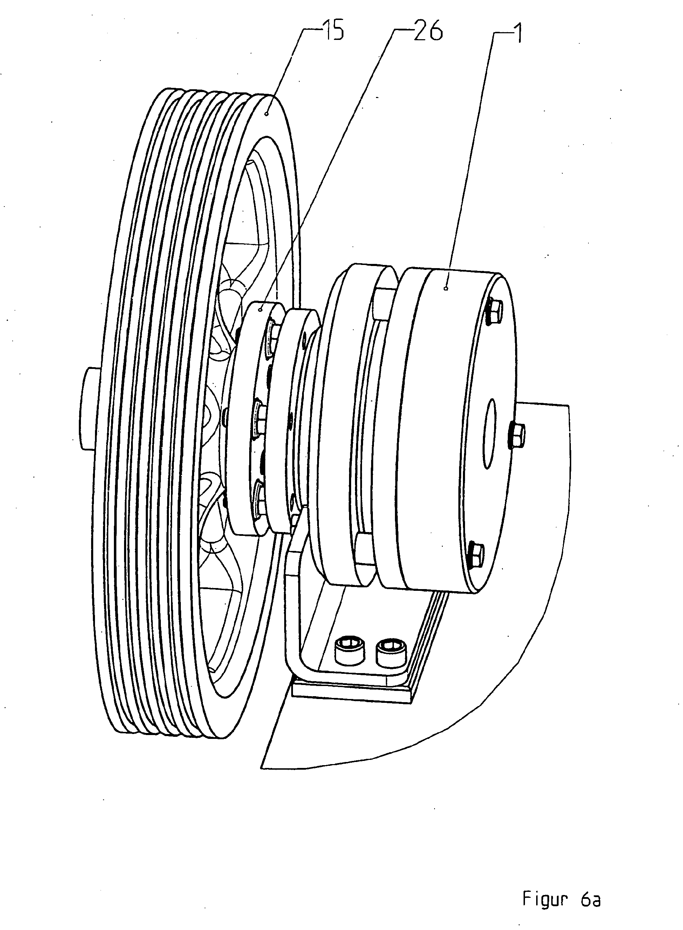

- Figur 6: ein Schnittbild der Anbaubremse mit Anschluss über ein Gewinde 28 in der Nabe 27 der Treibscheibe;
- Figur 6 a: ein Schrägbild von Figur 6;

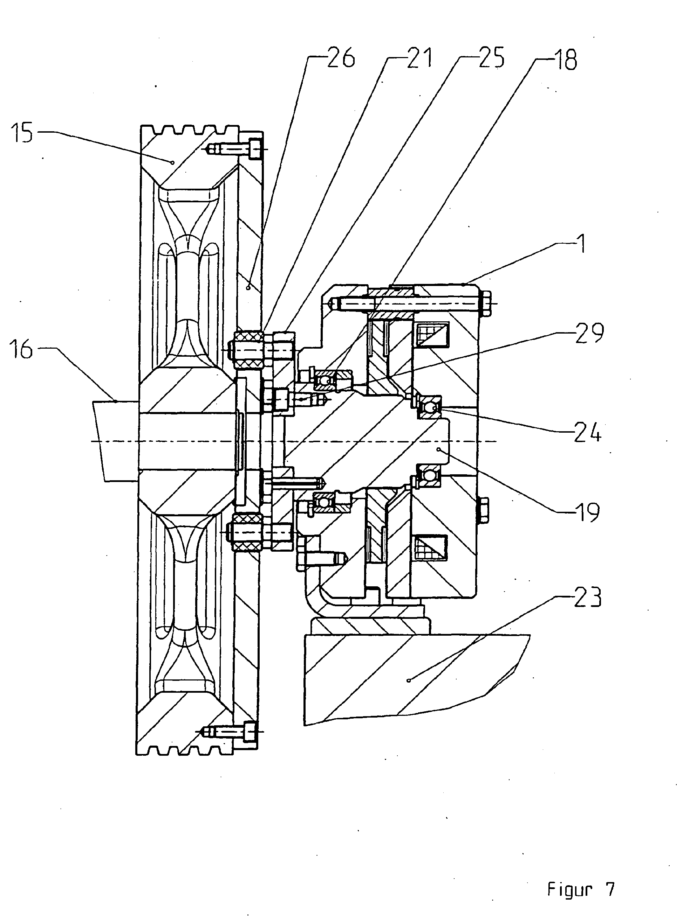

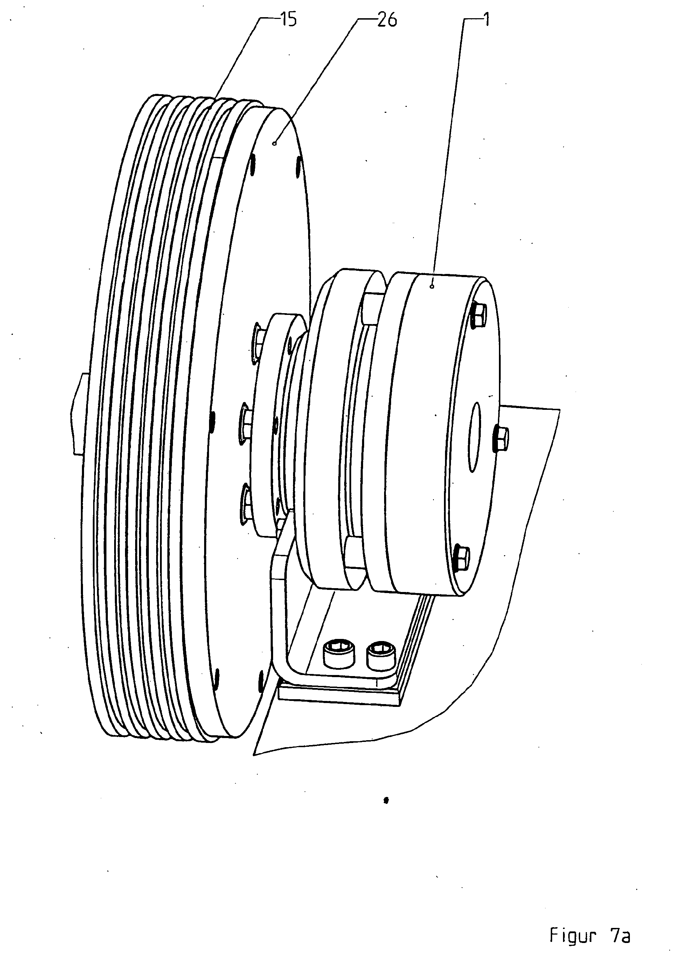

- Figur 7: ein Schnittbild der Anbaubremse mit Anschlussflansch und Befestigung am Außenring 15 der Treibscheibe;
- Figur 7 a: ein Schrägbild von Figur 7;

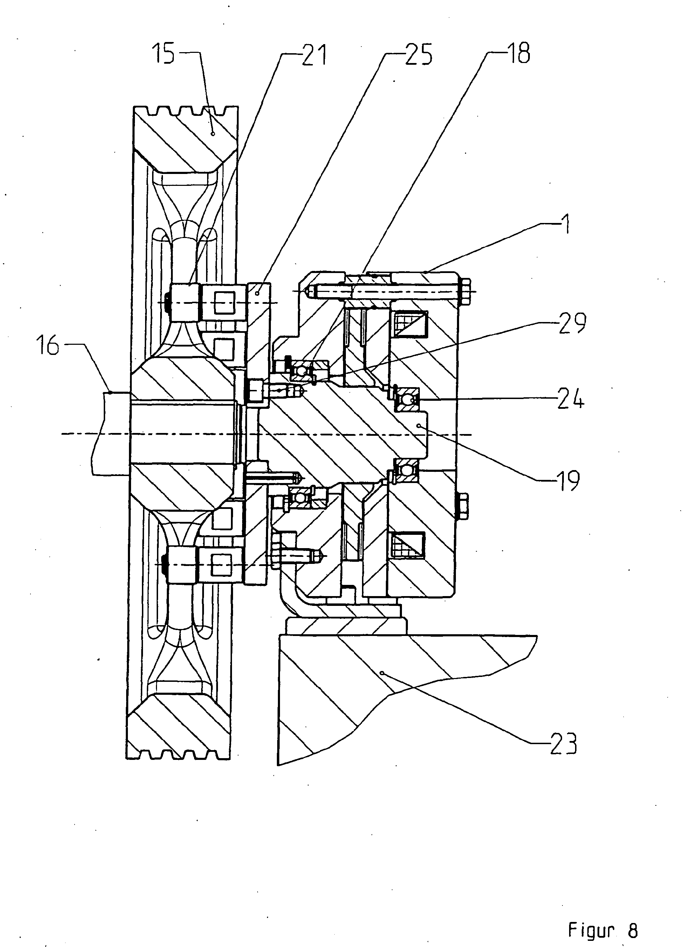

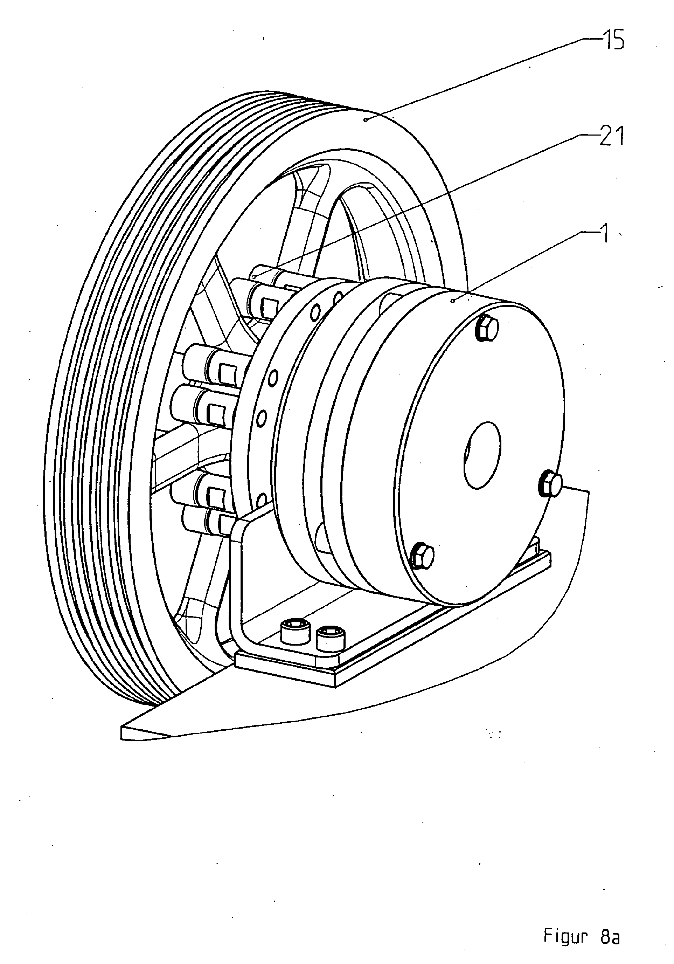

- Figur 8: ein Schnittbild der Anbaubremse mit Anschlussflansch durch Mitnahme in den Speichen der Treibscheibe;
- Figur 8 a: ein Schrägbild von Figur 8.

Bei der anzubauenden Bremse handelt es sich um das bekannte Prinzip einer ruhestrombetätigten Federdruckbremse, welche somit als Sicherheitsbremse wirkt, u.a. weil sie bei ausbleibendem Strom für den Elektromagneten die Bremswirkung durch die Druckfedern auslöst.

Figur 1 zeigt die Bremse 1, in welcher eine Magnetspule 2 vorhanden ist. Die Druckfedern 3 drücken die Ankerscheibe 4 gegen den Rotor 5, welcher mit je einem Reibbelag 6 links und rechts (d.h. beidseitig) bestückt ist. Das Drehmoment (Bremsmoment) wird erzeugt, indem die Druckfedern 3 die Ankerscheibe 4 gegen den Rotor 5 mit den beiden Reibbelägen 6 und eine Flanschplatte 7 drücken. Die Drehmomentübertragung vom Rotor 5 auf einen Übertragungsflansch 8 erfolgt über eine Umfangs-Verzahnung auf letzterem.

Um die Bremse frei zu machen bzw. zu lösen (lüften), wird auf die Magnetspule 2 Gleichstrom gegeben und es entsteht ein Magnetfeld, welches die Ankerscheibe 4 über den Luftspalt 30 gegen die Druckfedern 3 an die Bremse 1 anzieht und somit den Rotor 5 und über die Umfangs-Verzahnung auch den Übertragungsflansch 8 zur Drehung frei gibt.

Die Bremse 1 ist über achsparallel zur Mittellängsachse verlaufende Befestigungsschrauben 10 und darauf angeordneten Distanzbuchsen 9 mit der Flanschplatte 7 verschraubt. Dazwischen befindet sich ein Anschraubbügel 11, welcher über Langlöcher 12 in einem um 90° dazu abgewinkelten Fußteil auf einer Grundplatte oder einem Sockel 23 (Fig. 4) des jeweiligen Bauwerkes befestigt wird.

In Figur 2 ist der Anschlusskasten 14, sowie die Lüftüberwachung 13 dargestellt, welche den Zustand der Bremse (gebremst oder gelüftet) überwacht bzw. der zugehörigen Steuerung anzeigt.

In Figur 3 sieht man den zentralen Übertragungsflansch 8 mit der entsprechenden Umfangs-Verzahnung darauf, welche sich axial in den Rotor 5 (Figur 1) hinein erstreckt und das Drehmoment überträgt. Der Bügel 11 mit den Langlöchern 12 wird auf dem Sockel 23 (Fig. 4) befestigt.

Figur 4 zeigt die von einem nicht dargestellten herkömmlichen Antrieb angetriebene Treibscheibenwelle 16, auf welcher die Treibscheibe 15 mittels einer Passfeder drehstarr befestigt ist. Die Treibscheibenwelle 16 hat in der Ursprungsform einen zusätzlichen Lagerzapfen 17, auf welchem die Treibscheibe zusätzlich mit einem herkömmlichen Stehlager abgelagert wird. Diese Stehlagerung entfällt und es wird die Anbaubremse mit einer zusätzlichen Lagerung 18 als Pendellagerung angebaut, welche die Lagerung des Lagerzapfens 17 somit übernimmt. Eine Anbaunabe 19 mit einer Zusatznabe 20, welche über eine Passfeder verbunden ist, hat elastische Elemente 21, mit welchen das Drehmoment auf den Rotor 5 der Bremse übertragen wird. Die Anbaunabe 19 wird durch den Lagerzapfen 17 mittels einer konischen Klemmverbindung 31 befestigt und überträgt das Drehmoment auf die Treibscheibenwelle 16, welche mit der Treibscheibe 15 über eine Passfeder verbunden ist. Ein zusätzliches Gleitlager 22 dient zur weiteren Abstützung.

In Figur 5 wird die Anbaunabe 19 mit dem Zwischenflansch 25 durch Befestigungsschrauben 29 verbunden. Der ersetzte Pressdeckel, welcher die Treibscheibe 15 axial auf den Konus befestigte, wird durch einen neuen Verbindungsflansch 26 ersetzt, welcher über die elastischen Elemente 21 verbunden ist und das Drehmoment überträgt. Die Anbaunabe 19 ist jeweils mit einem Lager 18 und 24 innerhalb der Bremse separat gelagert.

Figur 6 zeigt eine ähnliche Variante wie Figur 5, jedoch ist hier der Verbindungsflansch 26 ausschließlich auf der Innennabe 27 der Treibscheibe 15 mittels Schrauben 28 befestigt.

In Figur 7 wird eine Variante gezeigt, bei welcher der Verbindungsflansch 26 am Außenring der Treibscheibe 15 befestigt ist.

In Figur 8 wird eine Variante gezeigt, in welcher vom Zwischenflansch 25 ausgehend die elastischen Elemente 21 direkt in die Speichen der Treibscheibe 15 hineinragen. Hierbei sind immer 2 elastische Elemente 21 jeweils links und rechts an eine Speiche anliegend (Fig. 8a), so dass eine weitgehend spielarme Drehmomentübertragung gewährleistet ist.

### Bezugszeichenliste

- 1: Bremse
- 2: Magnetspule
- 3: Druckfedern
- 4: Ankerscheibe
- 5: Rotor
- 6: Reibbeläge (links/rechts)
- 7: Flanschplatte
- 8: Übertragungsflansch (mit Verzahnung)
- 9: Distanzbuchsen
- 10: Befestigungsschrauben
- 11: Anschraubbügel
- 12: Langlöcher
- 13: Lüftüberwachung (Meldung - gebremst oder gelüftet)
- 14: Anschlusskasten
- 15: Treibscheibe
- 16: Treibscheibenwelle
- 17: Lagerzapfen
- 18: Lagerung in Flanschplatte 7
- 19: Anbaunabe
- 20: Zusatznabe
- 21: Elastische Elemente
- 22: Gleitlager als zusätzliches Stützlager
- 23: Sockel
- 24: Kugellager - in Bremse 1
- 25: Zwischenflansch
- 26: Verbindungsflansch - zur Aufnahme der elastischen Elemente 21
- 27: Innennabe der Treibscheibe
- 28: Befestigungsschrauben von Teil 26 mit Teil 27
- 29: Befestigungsschrauben von Teil 25 mit Teil 19
- 30: Luftspalt zwischen Ankerscheibe 4 und Bremse 1
- 31: Klemmverbindung auf Anbaunabe 19 zur Verbindung mit Lagerzapfen 17

## Patentansprüche

1. Elektromagnetisch lüftende Federdruckbremse (FDB)
1.1. zum Nachrüsten an vorhandene Treibscheiben (15) oder Treibscheibenwellen (16) bei Aufzügen,
1.2. die mit Seilen über eine Treibscheibe betrieben werden,
1.3. wobei nach der Nachrüstung die FDB konzentrisch zur Mittelachse der Treibscheibe/-welle (16) angeordnet ist
1.4. und auf der freien Seite der Treibscheibe (15) gegenüberliegend von der Antriebsseite orts- und drehfest befestigt ist,
1.5. und wobei der Rotor (5) der Bremse (1) fest oder elastisch mit dem freien Ende der Treibscheibe (15) oder Treibscheibenwelle (16) verbunden ist, um das Bremsmoment der FDB auf die Treibscheibe (15) zu übertragen,
**dadurch gekennzeichnet, dass**
1.6. die FDB auf einem separaten Sockel (23) des Bauwerkes angeordnet und
1.7. über einen Anschraubbügel (11) mit Langlöchern (12) an dem bauwerkseitigen Sockel (23) befestigt ist.

2. Bremse nach Anspruch 1, **dadurch gekennzeichnet, dass** die zusätzliche Lagerung der Treibscheibenwelle (16) über eine Lageranordnung (18) innerhalb der Bremse erfolgt.

3. Bremse nach einem der vorangehenden Ansprüche, **dadurch gekennzeichnet, dass** die Drehmomentübertragung auf den Lagerzapfen (17) über eine Klemmverbindung (31) erfolgt.

4. Bremse nach einem der vorangehenden Ansprüche, **dadurch gekennzeichnet, dass** die Anbaunabe (19) mit zwei Wälz-oder Gleitlagern (18+24) innerhalb der Bremse gelagert wird.

5. Bremse nach einem der vorangehenden Ansprüche, **dadurch gekennzeichnet, dass** die elastischen Elemente (21), welche auf dem Umfang verteilt axial in die Speichen der Treibscheibe (15) ragen, an den Abstand der Speichen über mehrere Bohrungen im Zwischenflansch (25) angepasst werden können.

6. Bremse nach Ansprüchen 1-5, **dadurch gekennzeichnet, dass** die Bremse als zweikreisige Bremse ausgeführt ist, etwa mit 2 Bremsen hintereinander, oder z.B. mit einer geteilten Ankerscheibe oder ähnlichem.

7. Bremse nach Ansprüchen 1-6, **dadurch gekennzeichnet, dass** die Bremse eine Nothandlüftung besitzt um z.B. mit Schrauben die Ankerscheibe (4) gegen die Druckfedern (3) anzuziehen und somit die Bremse (1) zu lüften.

## Claims

1. An electromagnetically disengaged spring-pressure brake (FDB) 1.1. for retrofitting to existing driving sheaves (15) or to driving sheave shafts (16) in elevators
1.2. which are operated using cables passed over a driving sheave,
1.3. wherein after said retrofitting the brake (FDB) being mounted to be concentric with the central axis of driving sheave (15) or driving sheave shaft (16) and
1.4. on the free side (opposite the input drive side) of driving sheave (15) and secured therewith in a fixed and rotationally locked manner
1.5. with rotor (5) of brake (1) being coupled fixedly or resiliently with the free end of driving sheave (15) or driving sheave shaft (16) for transmitting the braking torque of said FDB to said driving sheave (15),
**characterized in that**
1.6. the FDB is disposed on a separate base (23) provided in the building and
1.7. is adapted to be screwed in place onto building base (23) via a bracket (11) having slots (12) therein.

2. Brake as in claim 1, **characterized by** driving sheave (16) being additionally supported within the brake via a bearing assembly (18).

3. Brake as in any one of the preceding claims, **characterized by** torque transmission to trunnion (17) taking place via a clamp connection (31).

4. Brake as in any one of the preceding claims, **characterized in that** attachment hub (19) is supported inside the brake by means of two anti-friction or plain bearings (18+24).

5. Brake as in any one of the preceding claims, **characterized in that** said resilient elements (21) are peripherally distributed to axially extend into the spokes of driving sheave (15), said elements adapted to be matched to the spacing between the spokes by means of a plurality of bores in intermediate flange (25).

6. Brake as in claims 1-5, **characterized by** being designed to be a dual-circuit brake such as by comprising two serially connected brakes, or including a split armature disk, or the like.

7. Brake as in claims 1-6, **characterized by** including an emergency manual disengagement feature in the form of screws, for example, for forcing armature disk (4) against compression springs (3) to so disengage brake (1).

## Revendications

1. Frein à ressort (FR) à desserrage électromagnétique
1.1 destiné à l'adaptation sur des poulies motrices (15) ou arbres de poulies motrices (16) existants d'ascenseurs,
1.2 qui fonctionnent avec des câbles par l'intermédiaire d'une poulie motrice,
1.3 le frein à ressort, après l'adaptation, étant disposé concentriquement à l'axe médian de la poulie motrice/arbre de poulie motrice (16),
1.4 et étant fixé, de façon stationnaire et solidaire, sur le côté libre de la poulie motrice (15) à l'opposé du côté commande,
1.5 et le rotor (5) du frein (1) étant assemblé fixement ou élastiquement avec l'extrémité libre de la poulie motrice (15) ou de l'arbre (16) de la poulie motrice, pour transmettre le couple de freinage du frein à ressort à la poulie motrice (15),
**caractérisé en ce que**
1.6 le frein à ressort est disposé sur un socle séparé (23) de l'ouvrage et
1.7 est fixé par l'intermédiaire d'un étrier à visser (11) pourvu de trous longitudinaux (12) sur le socle (23) du côté ouvrage.

2. Frein suivant la revendication 1, **caractérisé en ce que** le montage supplémentaire de l'arbre (16) de la poulie motrice s'effectue par l'intermédiaire d'un agencement de paliers (18) à l'intérieur du frein.

3. Frein suivant l'une des revendications précédentes, **caractérisé en ce que** la transmission du couple au bout d'arbre (17) s'effectue par l'intermédiaire d'un accouplement de serrage (31).

4. Frein suivant l'une des revendications précédentes, **caractérisé en ce que** le moyeu rapporté (19) est monté à l'intérieur du frein avec deux roulements ou paliers lisses (18 +24).

5. Frein suivant l'une des revendications précédentes, **caractérisé en ce que** les éléments élastiques (21), qui pénètrent axialement, répartis sur le pourtour, dans les rayons de la poulie motrice (15), peuvent être adaptés à l'écartement des rayons par l'intermédiaire de plusieurs trous dans la bride intermédiaire (25).

6. Frein suivant les revendications 1 - 5, **caractérisé en ce que** le frein est réalisé sous forme de frein à deux circuits, par exemple avec 2 freins l'un derrière l'autre, ou avec un disque d'induit partagé ou analogues.

7. Frein suivant les revendications 1 - 6, **caractérisé en ce que** le frein présente un desserrage manuel de secours, pour serrer par exemple par des vis le disque d'induit (4) contre les ressorts de pression (3) et desserrer ainsi le frein (1).
